# EUROPEAN PATENT APPLICATION

(11) **EP 3 358 520 A1**
(43) Date of publication of application: **08.08.2018**
(21) Application number: 16852014.6
(22) Date of filing: 20.09.2016
(51) Int. Cl.: G06Q 50/10, G06Q 30/02, G06Q 10/04, H04W 88/02

(54) **AIR QUALITY PREDICTION SYSTEM AND METHOD THROUGH SURVEY, AND AIR QUALITY PREDICTION SERVER**

(30) Priority: 30.09.2015 KR 20150137777
(71) Applicant: Coway Co., Ltd., Gongju-si, Chungcheongnam-do 32508 (KR)
(72) Inventor: LEE, Byung-Hyuk, Seoul 08800 (KR); KIM, Tae-Hyun, Seoul 08800 (KR); KIM, Jong-Cheol, Seoul 08800 (KR); KANG, Sang-Hyeon, Seoul 08800 (KR)
(74) Representative: Nederlandsch Octrooibureau
(86) International application number: PCT/KR2016/010484
(87) International publication number: WO 2017/057867

(57) **Abstract**

Disclosed are an air quality prediction system and method through survey, and an air quality prediction server. The air quality prediction system through survey comprises : a portable terminal for receiving and transmitting a survey result from a user, and receiving and displaying a comment derived on the basis of the survey result; and an air quality prediction server for predicting air quality of a user's premise on the basis of the survey result received from the portable terminal and transmitting, to the portable terminal, an air quality prediction result and a comment about the air quality prediction result.

## Description

### [Technical Field]

The present disclosure relates to an air quality prediction system and method through a survey, and an air quality prediction server.

### [Background Art]

As interest in the need for pleasant residential environments is increasing, the need for the management of the quality of indoor air has arisen.

Air cleaners are devices for removing pollutants contained in air to purify air, and are effective in the improvement of the quality of indoor air.

However, users have difficulty in gaining an awareness of whether the quality of indoor air is good or bad, without an additional sensor device, and further, in feeling the effect of the use of an air cleaner. Thus, the user may have limitations in feeling the necessity of the use of an air cleaner.

### [Disclosure]

### [Technical Problem]

An aspect of the present disclosure may provide a method of determining the need to use an air cleaner on a more objective basis.

### [Technical Solution]

According to an aspect of the present disclosure, an air quality prediction system through a survey may be provided.

The air quality prediction system may include: a portable terminal configured to receive and transmit a survey result from a user, and to receive and display a comment derived on the basis of the survey result; and an air quality prediction server configured to predict air quality of a user's living space on the basis of the survey result received from the portable terminal and transmit, to the portable terminal, an air quality prediction result and a comment regarding the air quality prediction result.

According to another aspect of the present disclosure, an air quality prediction method through a survey may be provided.

The air quality prediction method may include: predicting air quality of a user's living space, on the basis of a survey result received from a portable terminal; transmitting an air quality prediction result and a preset comment regarding the air quality prediction result to the portable terminal; verifying the air quality prediction result, on the basis of the measured air quality data of the user's living space received from an air quality measurement unit; and transmitting the air quality verification result to the portable terminal.

According to another aspect of the present disclosure, an air quality prediction server may be provided.

The air quality prediction server may include: a communications unit configured to communicat with a portable terminal; an air quality prediction unit configured to calculate an indoor air quality score by referring to a preset grade for each option on the basis of a survey result received from the portable terminal through the communications unit, and to transmit the calculated indoor air quality score and a comment regarding the indoor air quality score to the portable terminal through the communications unit; and a storage unit configured to store information required for calculating the indoor air quality score and provide the comment by the air quality prediction unit.

The foregoing technical solutions to the above-mentioned problems do not fully enumerate all of the features of the present disclosure. Various features of the present disclosure and the resulting advantages and effects will be understood in more detail with reference to the following detailed examples.

### [Advantageous Effects]

According to an exemplary embodiment in the present disclosure, a more objective basis for a need to use an air cleaner may be proposed by predicting air quality on the basis of a survey result obtained from a user, and providing proper comments to the user depending on a result of the prediction of the air quality.

### [Description of Drawings]

FIG. 1 is a block diagram of an air quality prediction system through a survey, according to an exemplary embodiment in the present disclosure;
FIG. 2 is a flowchart of an air quality prediction method through a survey, according to another exemplary embodiment in the present disclosure;
FIG. 3 illustrates an example of conducting a survey through a portable terminal, according to an exemplary embodiment in the present disclosure; and
FIGS. 4 and 5 illustrate examples of providing comments through portable terminals, depending on survey results, according to exemplary embodiments in the present disclosure.

### [Best Mode for Invention]

Exemplary embodiments of the present disclosure will hereinafter be described with reference to the accompanying drawings, so that those skilled in the art to which the present disclosure pertains may easily carry out the exemplary embodiments. Further, in the following description of exemplary embodiments in the present disclosure, a detailed description of known configurations or functions incorporated herein will be omitted when the gist of the present disclosure may be rendered unclear thereby. In addition, the same reference signs may be used for constituent elements having similar functions and effects throughout the entire of the drawings.

In the specification, when describing that any element is "connected" to another element, this connection includes not only "direct connection" but also "indirect connection" by which both elements are connected via another element. Further, the term "comprise" or "include" used throughout the specification means that it does not eliminate alternative elements, but includes another element, unless otherwise stated.

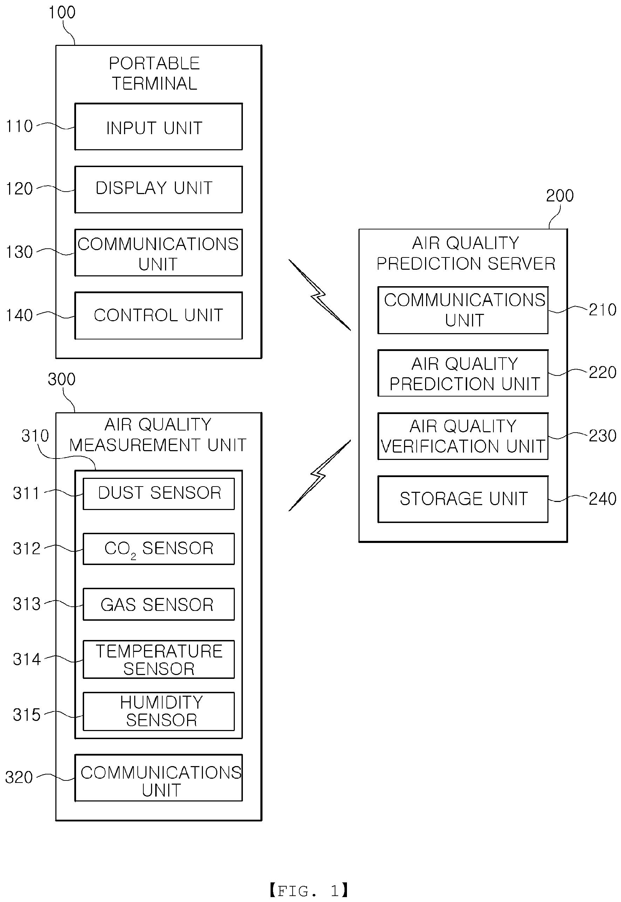

FIG. 1 is a block diagram of an air quality prediction system through a survey, according to an exemplary embodiment in the present disclosure.

Referring to FIG. 1, the air quality prediction system, according to an exemplary embodiment, may include a portable terminal 100 and an air quality prediction server 200, and in addition thereto, may further include an air quality measurement unit 300.

The portable terminal 100 may receive a survey result from a user, transmit the survey result to the air quality prediction server 200, receive a comment from the air quality prediction server 200, and provide the comment to the user, and may include an input unit 110, a display unit 120, a communications unit 130, and a control unit 140.

The input unit 110 may receive the survey result from the user, and the display unit 120 may display, to the user, the comment derived on the basis of question items for a survey and the survey result. For example, the input unit 110 and the display unit 120 may be provided as an integrated touchscreen sensing user contact and generating an input signal while displaying information. However, the input unit 110 and the display unit 120 are not limited thereto. For example, the input unit 110 may be provided as a button-type input device or the like, and the display unit 120 may be provided as a liquid crystal display (LCD) or a light emitting diode (LED), individually.

The communications unit 130 may communicate with the air quality prediction server 200 to be described later, and may be implemented in a wireless communications method, such as Wi-Fi or the like. However, a communications technique used by the communications unit 130 is not limited thereto, and the communications unit 130 may be implemented by various wireless communications techniques.

The control unit 140 may control operations of the respective constituent elements of the portable terminal 100, and may be provided as a processor, a central processing unit (CPU), a graphics processing unit (GPU), a microprocessor, an application-specific integrated circuit (ASIC), or a field-programmable gate array (FPGA).

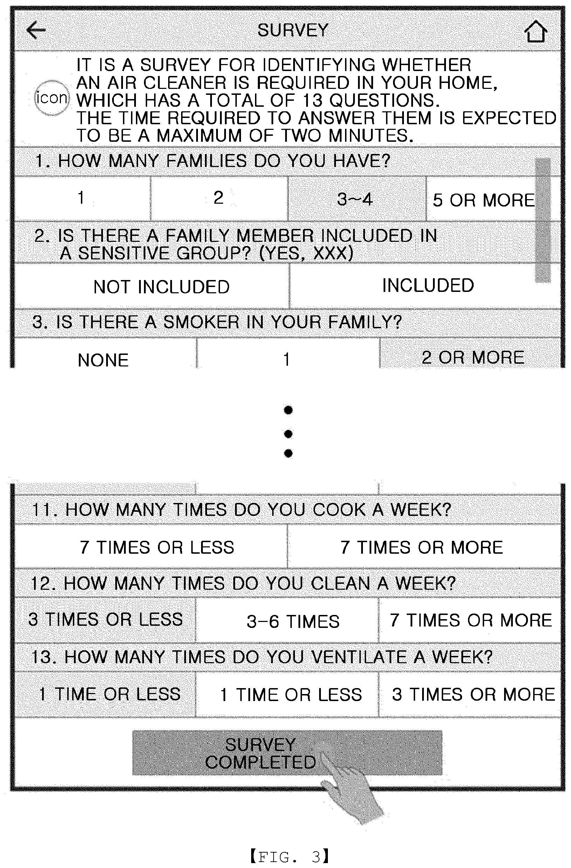

For example, the control unit 140 may display a plurality of predetermined question items and options for the same through the display unit 120, in order to conduct a survey to be used as raw data for the prediction of air quality. FIG. 3 illustrates an example of conducting a survey through a portable terminal, according to an exemplary embodiment in the present disclosure.

For example, the question items may be classified as household information, outdoor air quality information, residential environment information, and life pattern information.

Here, the household information may include information on household members, for example, on the number of household members, whether a sensitive group is included, the number of indoor smokers, and whether an environmental disease holder is included. Health risks appearing when individuals are exposed to a harmful substance may be different, and a group particularly sensitive to the harmful substance is referred to as a sensitive group, for example, children, old people, pregnant women, or invalids. Whether the sensitive group is included may indicate whether a household member is included in the sensitive group. The number of indoor smokers may mean the number of smokers smoking indoors. In addition, environmental diseases may mean health disorders occurring in association with environmental factors, such as physical, chemical, and biological factors, for example, environmental eye diseases, environmental respiratory diseases, environmental cardiovascular diseases, allergic rhinitis, asbestos diseases, pollen allergies, atopic dermatitis, and asthma. Whether the environmental disease holder is included may indicate whether any of the household members has an environmental disease.

In addition, the outdoor air quality information may include an outdoor air quality grade according to a residential area. For example, a residential area may be received from the user to obtain the outdoor air quality information. Outdoor air quality of each residential area may be preset as a grade, based on big data on previously accumulated outdoor air quality, and an outdoor air quality grade preset for an input residential area may be utilized as the outdoor air quality information.

In addition, the residential environment information may include information on a residential environment, for example, a floor space of a household, a building type, a number of a residence floor, a construction year, or a period of remodeling or new furniture purchase.

Further, the life pattern information may include information on a life pattern of the household member, for example, the number of cooking times, the number of cleaning times, and the number of ventilating times in a preset period.

Table 1 shows an example of the foregoing question items, options for the respective question items, and grades granted to the options. In addition, Table 2 shows an example of an outdoor air quality grade preset according to a residential area. Further, Table 3 shows an example of a score range corresponding to each grade.

The question items, the options for the respective question items, the grades, and the score range corresponding thereto shown in Tables 1 to 3 are examples, and may be variously changed if desired.

**[Table 1]**

| Classification | Question item | Option and score | | | | |
|---|---|---|---|---|---|---|
| Household information | Number of household members | 1 | 2 | 3 or 4 | 5 or more | |
| | | Low | High | Middle | High | |
| | Whether sensitive group is included | Not included | Included | | | |
| | | Low | Low | | | |
| | Number of indoor smokers | None | 1 | 2 or more | | |
| | | Middle | Middle | High | | |
| | Whether environmental disease holder is included | No | Yes | | | |
| | | Low | Low | | | |
| Outdoor air quality information | Outdoor air quality grade | High | Middle | Low | | |
| | | I | II | III | | |
| Residential environment information | Household size (*pyeong*) | Less than 15 | 15 to 20 | 20 to 25 | 25 to 30 | 30 or more |
| | | High | High | High | Middle | Low |
| | Building type | Apartment | Studio apartment | Housing | | |
| | | Low | Middle | High | | |
| | Number of residential floors | Ground floor | Low floor (2 to 5 floors) | High floor (6 floor or higher) | | |
| | | High | Middle | Low | | |
| | Construction year | After 2006 | Before 2006 | | | |
| | | Low | Middle | | | |
| | Period of remodeling or new furniture purchase | 1 year or more (none included) | 6 months to 1 year | Last 6 months | | |
| | | Low | Low | High | | |
| Life pattern information | Number of cooking times (number of times/week) | 7 times or more | Less than 7 times | | | |
| | | Middle | Middle | | | |
| | Number of cleaning times (number of times/week) | 7 times or more | 3 to 6 times | Less than 3 times | | |
| | | Middle | Middle | Middle | | |
| | Number of ventilating times (number of times/day ) | 3 times or more | 1 or 2 times | Less than 1 time | | |
| | | Middle | Middle | Middle | | |

**[Table 2]**

| Residential area | Outdoor air quality grade |
|---|---|
| Gyeonggi-do, Incheon, Chungcheongbuk-do, Seoul, Jeollabuk-do | High |
| Gangwon-do, Chungcheongnam-do, Busan, Daejeon, Gwangju, Ulsan, Gyeongsangnam-do, Daegu | Middle |
| Gyeongsangbuk-do, Jeollanam-do, Jeju-do | Low |

**[Table 3]**

| Grade | Range |
|---|---|
| High (pollution level, high) | 8 to 11 |
| Middle (pollution level, normal) | 4 to 7 |
| Middle (pollution level, low) | 0 to 3 |
| I | 10 to 20 |
| II | 20 to 30 |
| III | 30 to 40 |

In addition, the control unit 140 may transmit the survey result received through the input unit 110 to the air quality prediction server 200 through the communications unit 130.

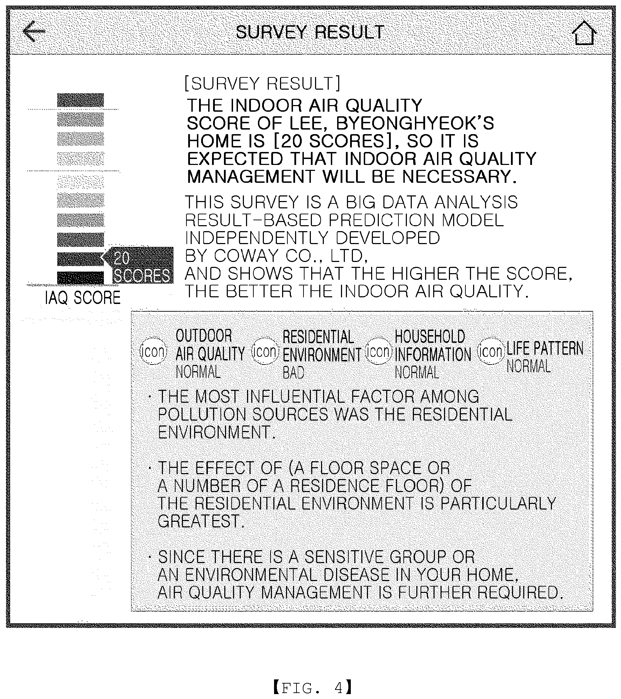

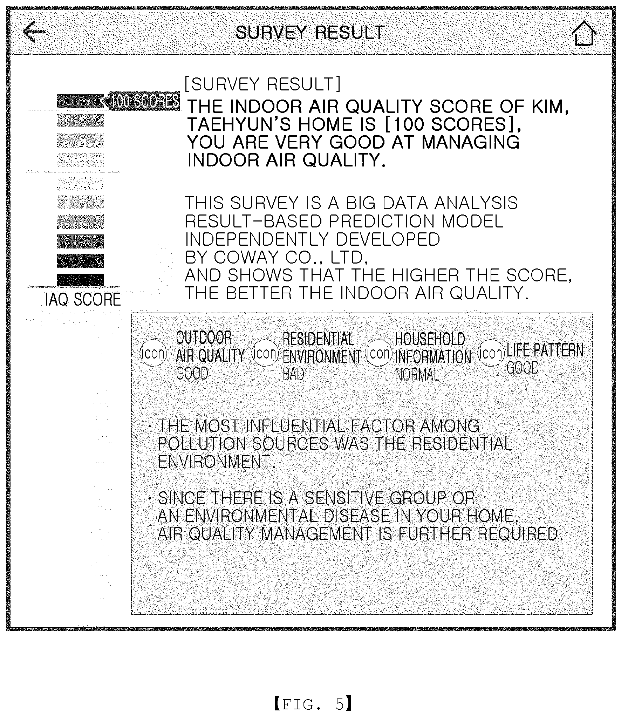

Further, the control unit 140 may provide the comment received from the air quality prediction server 200 through the communications unit 130 to the user through the display unit 120. FIGS. 4 and 5 illustrate examples of providing comments through portable terminals, depending on survey results, according to exemplary embodiments in the present disclosure.

As illustrated in FIGS. 4 and 5, the display unit 120 may display an indoor air quality score derived on the basis of the survey result by the air quality prediction server 200 to be described later, and a comment thereabout.

In addition, the display unit 120 may display grades determined by the classification of the question items by the air quality prediction server 200 to be described later, and may also additionally display various pieces of analysis information based on the survey result.

For example, in FIGS. 4 and 5, information on a question item, having a highest score of a highest grade, in the classification of the question items may be provided within square brackets; information on at least one question item, having a high score, of detailed question items of the classification of the question items provided within the square brackets may be provided within brackets; and information on items included in question items for whether the sensitive group is included and whether the environmental disease holder is included may be provided within braces.

An application may be installed on the portable terminal 100 to conduct the survey, s described above, and to provide the comment derived on the basis of the survey result in communication with the air quality prediction server 200.

The air quality prediction server 200 may predict air quality of the user's living space on the basis of the survey result received from the portable terminal 100, and may provide a comment (for example, a comment or the like about the necessity of use of an air cleaner) to the user on the basis of the predicted air quality, may include a communications unit 210, an air quality prediction unit 220, and a storage unit 240, and may further include an air quality verification unit 230 if desired.

The communications unit 210 may communicate with the portable terminal 100 and an air quality measurement unit 300, and may be implemented in a wireless communications method, such as Wi-Fi or the like. However, a communications technique used by the communications unit 210 is not limited thereto, and the communications unit 210 may be implemented by various wireless communications techniques.

The air quality prediction unit 220 may predict the air quality of the user's living space on the basis of the survey result received from the portable terminal 100 through the communications unit 210, and may provide the comment with regard thereto.

For example, the air quality prediction unit 220 may calculate the indoor air quality score with reference to the grade granted to each option in Table 1, on the basis of the survey result, and may transmit the calculated score and a comment regarding the score (for example, a comment regarding the necessity of use of an air cleaner) to the portable terminal 100 through the communications unit 210.

Table 4 shows an example of indoor air quality scores and a comment regarding each of the indoor air quality scores. Here, the indoor air quality score may be represented as a range of 0 to 100 scores, and a higher score may mean better indoor air quality.

**[Table 4]**

| Calculated score | Indoor air quality score | Necessity of use of air cleaner |
|---|---|---|
| 47 to 59 | Score of 100 | Use recommended |
| 60 to 63 | Score of 90 | Use recommended |
| 64 to 65 | Score of 80 | Use recommended |
| 66 to 68 | Score of 70 | Use required |
| 69 to 70 | Score of 60 | Use required |
| 71 to 73 | Score of 50 | Use required |
| 74 to 75 | Score of 40 | Use required |
| 76 to 78 | Score of 30 | Use required |
| 79 to 83 | Score of 20 | Use required |
| 83 to 110 | Score of 10 | Use required |

In addition, the air quality prediction unit 220 may calculate a score for the classification of each question item with reference to the grade granted to each option in Table 1, on the basis of the survey result, may determine a grade (for example, four grades of good, normal, bad, and very bad) by the classification according to the score, and then may transmit the grade to the portable terminal 100 through the communications unit 210.

Table 5 shows an example of determining the grade by the classification on the basis of the score calculated according to the classification of each question item.

**[Table 5]**

| Classification | Calculated score | | | |
|---|---|---|---|---|
| | Good | Normal | Bad | Very bad |
| Household information | 7 to 10 | 11 to 13 | 14 to 16 | 17 to 19 |
| Outdoor air quality information | 10 to 20 | 20 to 30 | 30 to 40 | - |
| Residential environment information | 17 to 23 | 24 to 30 | 31 to 37 | 38 to 43 |
| Life pattern information | 13 to 14 | 15 to 16 | 17 | 18 |

The quality verification unit 230 may verify the result (that is, an indoor air quality grade or the like) predicted by the air quality prediction unit 220, on the basis of measured air quality data received from the air quality measurement unit 300 through the communications unit 210.

According to an example, the quality verification unit 230 may calculate an indoor air quality score, according to a preset criteria, on the basis of the measured air quality data received from the air quality measurement unit 300, and may compare the calculated indoor air quality score with the indoor air quality score determined by the air quality prediction unit 220 to verify the accuracy of the air quality prediction result.

According to another example, when an air cleaner (not illustrated) is installed and operated in the user's living space, the quality verification unit 230 may calculate an indoor air quality score, according to a preset criteria, on the basis of the measured air quality data received from the air quality measurement unit 300, and may compare the calculated indoor air quality score with the indoor air quality score determined by the air quality prediction unit 220 to exhibit an air quality improvement effect, depending on the operation of the air cleaner.

The storage unit 240 may store various pieces of information, for example, the information of Tables 1 to 5 or the like, required for the air quality prediction unit 220 to determine the indoor air quality score on the basis of the survey result and to provide the comment thereabout to the user.

The air quality measurement unit 300 may measure the air quality of the user's living space, and may include a sensor unit 310 and a communications unit 320.

The sensor unit 310 may measure surrounding air quality, and may include, for example, various types of sensors able to measure air quality, such as a dust sensor for measuring a concentration of dust in the air, a CO₂ sensor for measuring a concentration of CO₂ in the air, a gas sensor (a VOC sensor) for measuring a concentration of a gas in the air, a temperature sensor for measuring a temperature of the air, and a humidity sensor for measuring a humidity of the air.

The communications unit 320 may communicate with the air quality prediction server 200, and may be implemented in a wireless communications method, such as Wi-Fi or the like. However, a communications technique used by the communications unit 320 is not limited thereto, and the communications unit 320 may be implemented by various wireless communications techniques. For example, the communications unit 320 may transmit air quality data measured by the sensor unit 310 to the air quality prediction server 200.

### [Mode for Invention]

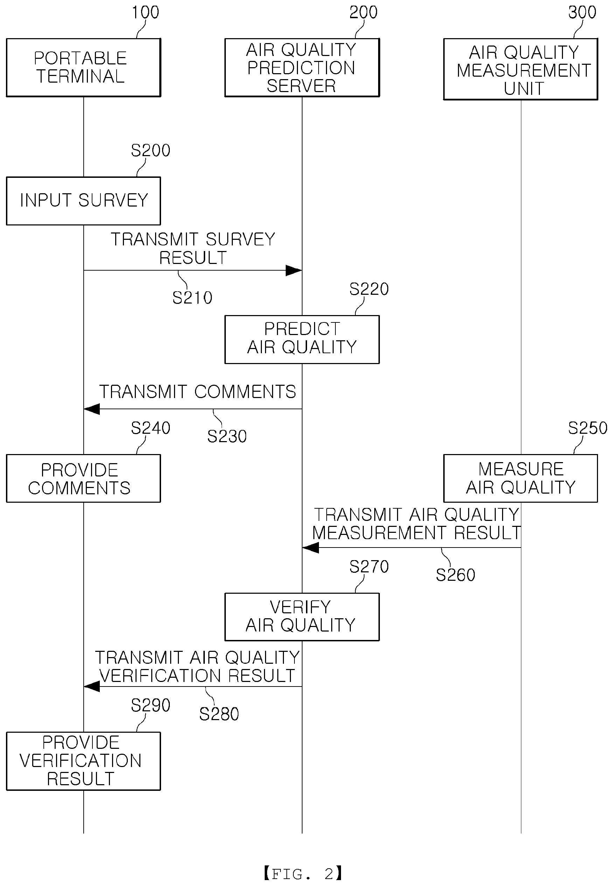

FIG. 2 is a flowchart of an air quality prediction method through a survey, according to another exemplary embodiment in the present disclosure.

Referring to FIG. 2, the portable terminal 100 may receive a survey result for prediction of air quality from the user (S200), and may transmit the survey result to the air quality prediction server 200 (S210).

The air quality prediction server 200 may predict air quality of the user's living space, on the basis of the received survey result (S220), and may transmit a result of prediction and a comment thereabout to the portable terminal 100 (S230) .

The portable terminal 100 may provide the received comment to the user by displaying the comment (S240).

Meanwhile, the air quality measurement unit 300 may measure surrounding air quality (S250), and may transmit measured air quality data to the air quality prediction server 200 (S260).

Accordingly, the air quality prediction server 200 may verify the result of prediction of air quality, on the basis of the received measured air quality data.

In addition, the air quality prediction server 200 may transmit a result of verification of air quality to the portable terminal 100 (S280), and the portable terminal 100 may provide the received result of verification to the user by displaying the received result of verification (S290).

Since a detailed method for performing the foregoing respective steps is the same as that describe above with reference to FIG. 1, a duplicated description thereof is omitted.

While exemplary embodiments have been shown and described above, it will be apparent to those skilled in the art that modifications and variations could be made without departing from the scope of the present invention, as defined by the appended claims.

## Claims

1. An air quality prediction system comprising:
a portable terminal configured to receive and transmit a survey result from a user, and to receive and display a comment derived on the basis of the survey result; and
an air quality prediction server configured to predict air quality of a user's living space on the basis of the survey result received from the portable terminal and transmit, to the portable terminal, an air quality prediction result and a comment regarding the air quality prediction result.

2. The air quality prediction system of claim 1, wherein the portable terminal includes:
an input unit configured to receive the survey result;
a display unit configured to display information;
a communications unit configured to communicate with the air quality prediction server; and
a control unit configured to display a plurality of question items predetermined for a survey, and options for the respective question items through the display unit, to transmit the survey result received from the input unit to the air quality prediction server through the communications unit, and to provide the comment received from the air quality prediction server through the communications unit to the user through the display unit.

3. The air quality prediction system of claim 2, wherein the plurality of question items include household information, outdoor air quality information, residential environment information, and life pattern information.

4. The air quality prediction system of claim 3, wherein the household information includes the number of household members, whether a predetermined sensitive group is included, the number of indoor smokers, and whether a predetermined environmental disease holder is included.

5. The air quality prediction system of claim 3, wherein the outdoor air quality information includes a predetermined outdoor air quality grade, according to a residential area.

6. The air quality prediction system of claim 3, wherein the residential environment information includes a floor space of a household, a building type, a number of a residence floor, a construction year, and a period of remodeling or new furniture purchase.

7. The air quality prediction system of claim 3, wherein the life pattern information includes the number of cooking times, the number of cleaning times, and the number of ventilating times in a preset period.

8. The air quality prediction system of claim 1, wherein the air quality prediction server includes:
a communications unit configured to communicate with the portable terminal;
an air quality prediction unit configured to calculate an indoor air quality score by referring to a preset grade for each option on the basis of the survey result received from the portable terminal through the communications unit, and to transmit the calculated indoor air quality score and a comment regarding the indoor air quality score to the portable terminal through the communications unit; and
a storage unit configured to store information required for calculating the indoor air quality score and providing the comment by the air quality prediction unit.

9. The air quality prediction system of claim 8, further comprising: an air quality measurement unit configured to measure the air quality of the user's living space and to transmit the measured air quality data to the air quality prediction server.

10. The air quality prediction system of claim 9, wherein the air quality prediction server further comprises an air quality verification unit configured to verify the air quality prediction result predicted by the air quality prediction unit, on the basis of the measured air quality data received from the air quality measurement unit through the communications unit.

11. An air quality prediction server comprising:
a communications unit configured to communicate with a portable terminal;
an air quality prediction unit configured to calculate an indoor air quality score by referring to a preset grade for each option on the basis of a survey result received from the portable terminal through the communications unit, and to transmit the calculated indoor air quality score and a comment regarding the indoor air quality score to the portable terminal through the communications unit; and
a storage unit configured to store information required for calculating the indoor air quality score and providing the comment by the air quality prediction unit.

12. The air quality prediction server of claim 11, wherein the survey result includes survey results for a plurality of question items preset, and the plurality of question items include household information, outdoor air quality information, residential environment information, and life pattern information.

13. The air quality prediction server of claim 11, further comprising: an air quality verification unit configured to verify the indoor air quality score determined by the air quality prediction unit, on the basis of measured air quality data received from the air quality measurement unit for measuring air quality of a user's living space through the communications unit.

14. An air quality prediction method comprising:
predicting air quality of a user's living space, on the basis of a survey result received from a portable terminal;
transmitting an air quality prediction result and a preset comment regarding the air quality prediction result to the portable terminal;
verifying the air quality prediction result, on the basis of the measured air quality data of the user's living space received from an air quality measurement unit; and
transmitting the air quality verification result to the portable terminal.

15. The air quality prediction method of claim 14, wherein the predicting air quality includes calculating an indoor air quality score, on the basis of the survey result.
